# EUROPÄISCHE PATENTSCHRIFT

(11) **EP 2 619 948 B1**
(45) Veröffentlichungstag und Bekanntmachung des Hinweises auf die Patenterteilung: **06.08.2014**
(21) Anmeldenummer: 11764704.0
(22) Anmeldetag: 21.09.2011
(51) Int. Cl.: H04L 12/40

(54) **VERFAHREN UND TEILNEHMERSTATION ZUM OPTIMIERTEN ÜBERTRAGEN VON DATEN ZWISCHEN TEILNEHMERSTATIONEN EINES BUSSYSTEMS**
METHOD AND SUBSCRIBER STATION FOR OPTIMIZED DATA TRANSMISSION BETWEEN SUBSCRIBER STATIONS IN A BUS SYSTEM
PROCÉDÉ ET STATION D'ABONNÉ POUR LA TRANSMISSION OPTIMISÉE DE DONNÉES ENTRE LES STATIONS D'ABONNÉ D'UN SYSTÈME DE BUS

(30) Priorität: 24.09.2010 DE 102010041368
(43) Veröffentlichungstag der Anmeldung: 31.07.2013
(73) Patentinhaber: Robert Bosch GmbH, 70442 Stuttgart (DE)
(72) Erfinder: HARTWICH, Florian, 72762 Reutlingen (DE); SCHNITZER, Reiner, 72762 Reutlingen (DE)
(86) Internationale Anmeldenummer: PCT/EP2011/066430
(87) Internationale Veröffentlichungsnummer: WO 2012/038472

(56) Entgegenhaltungen:
- WO-A2-2004/111859
- DE-A1- 10 301 637
- US-A1- 2003 076 221

## Beschreibung

### Stand der Technik

Die vorliegende Erfindung betrifft ein Verfahren zum Übertragen von Daten zwischen Teilnehmerstationen eines Bussystems über einen von mehreren Teilnehmerstationen gemeinsam genutzten ersten Kanal und einen von mehreren Teilnehmerstationen des Bussystems genutzten zweiten Kanal, wobei das auf dem zweiten Kanal übertragene Signal auch abhängig von den auf dem ersten Kanal übertragenen Daten ist. Die Erfindung betrifft außerdem eine Teilnehmerstation eines Bussystems, mit einer Medienanschlusseinheit zur Durchführung des Verfahrens.

### Offenbarung der Erfindung

Beispielsweise aus der Offenlegungsschrift DE 100 00 305 A1 ist das "Controller Area Network" (CAN) sowie eine als "Time Triggered CAN" (TTCAN) bezeichnete Erweiterung des CAN bekannt. Das beim CAN verwendete Medienzugriffssteuerverfahren beruht auf einer bitweisen Arbitrierung. Bei der bitweisen Arbitrierung können mehrere Teilnehmerstationen gleichzeitig versuchen, Daten über den Kanal des Bussystems zu übertragen, ohne dass hierdurch die Datenübertragung gestört wird. Die Teilnehmerstationen können beim Senden eines Bits über den Kanal den logischen Zustand (0 oder 1) des Kanals ermitteln. Entspricht ein Wert des gesendeten Bits nicht dem ermittelten logischen Zustand des Kanals, dann beendet die Teilnehmerstation den Zugriff auf den Kanal. Bei CAN wird die bitweise Arbitrierung üblicherweise in einem Arbitrierungsfeld innerhalb eines über den Kanal zu übertragenden Datenrahmens vorgenommen. Nachdem eine Teilnehmerstation das Arbitrierungsfeld vollständig an den Kanal gesendet hat, weiß sie, dass sie exklusiven Zugriff auf den Kanal hat. Somit entspricht das Ende der Übertragung des Arbitrierungsfelds einem Beginn eines Freigabeintervalls, innerhalb dessen die Teilnehmerstation den Kanal exklusiv nutzen kann. Gemäß der Protokollspezifikation des CAN dürfen andere Teilnehmerstationen so lange nicht auf den Kanal zugreifen, das heißt Daten an den Kanal senden, bis die sendende Teilnehmerstation ein Prüfsummenfeld (CRC-Feld) des Datenrahmens übertragen hat. Somit entspricht ein Endzeitpunkt der Übertragung des CRC-Felds einem Ende des Freigabeintervalls.

Durch die bitweise Arbitrierung wird eine zerstörungsfreie Übertragung des Datenrahmens über den Kanal erreicht. Hierdurch ergeben sich gute Echtzeiteigenschaften des CAN, wohingegen bei Medienzugriffssteuerverfahren, bei denen der von einer Teilnehmerstation gesendete Datenrahmen aufgrund einer Kollision mit einem von einer anderen Station gesendeten weiteren Datenrahmen während der Übertragung über den Kanal zerstört werden kann, ein deutlich ungünstigeres Echtzeitverhalten haben, da es aufgrund der Kollision und der dadurch erforderlichen neuen Übertragung des Datenrahmens zu einer Verzögerung der Datenübertragung kommt.

Eine weitere Verbesserung des Echtzeitverhaltens des CAN wird durch die Erweiterung TTCAN erreicht. Gemäß der Protokollspezifikation von TTCAN wird eine Zeitfensterstruktur definiert, die mehrere aufeinander folgende Zeitfenster (oftmals auch als "Zeitschlitze" oder "time slots" bezeichnet) umfasst und sich regelmäßig wiederholt. Hierbei kann einem bestimmten Nachrichtentyp und somit einer bestimmten Teilnehmerstation ein bestimmtes Zeitfenster, innerhalb dessen Nachrichten dieses Nachrichtentyps übertragen werden dürfen, zugewiesen werden. Somit sind bei TTCAN bestimmte Zeitfenster vorgesehen, innerhalb denen eine bestimmte Station exklusiven Zugriff auf den Kanal einer CAN-Domäne hat. Bei TTCAN wird der Zugriff auf den Kanal zumindest teilweise nach dem Prinzip des zeitbasierten Vielfachzugriffs (Time Division Multiple Access, TDMA) koordiniert.

Die Protokolle des CAN beziehungsweise deren Erweiterung TTCAN eignen sich besonders zum Übertragen kurzer Meldungen unter Echtzeitbedingungen. Sollen jedoch größere Datenblöcke über eine CAN-Domäne übertragen werden, dann macht sich die relativ geringe Bitrate des Kanals störend bemerkbar. Um die korrekte Funktion der bitweisen Arbitrierung zu gewährleisten, muss für die Übertragung eines Bits eine insbesondere von der Ausdehnung des Bussystems und der Signalausbreitungsgeschwindigkeit auf dem Kanal abhängige Mindestdauer eingehalten werden. Somit kann die Bitrate durch Verringern der Dauer der einzelnen Bits nicht ohne weiteres erhöht werden.

Um dennoch relativ große Datenmengen über eine Kommunikationsschnittstelle parallel zu einem langsameren Datenstrom, der durch ein Medienzugriffssteuerverfahren kontrolliert wird, wie zum Beispiel einem CAN-Datenstrom, hinreichend schnell übertragen zu können, schlägt die beim DPMA unter dem Aktenzeichen DE 10 2009 026 961 anhängige Patentanmeldung vor, eine Hochfrequenz (HF)-Kommunikation über ein beliebiges Bussystem, beispielsweise einen CAN-Bus, mit einem beliebigen Zugriffsprotokoll durchzuführen. Dabei kann der Zugriff auf den von mehreren Teilnehmerstationen zur HF-Kommunikation genutzten zweiten Kanal nach einem beliebigen Zugriffsverfahren gesteuert werden. Über den ersten Kanal zu übertragende erste Daten und über den zweiten Kanal zu übertragende zweite Daten werden über eine gemeinsame Signalleitung übertragen.

Das Dokument US 2003/076221 A1 beschreibt ein System zum Datenaustausch in einem Fahrzeug, bei welchem ein Teil der zu übertragenden Daten (so genannte "important data") zusätzlich zu der Übertragung über ein dediziertes Kommunikations-Bussystem auch mittels einer "modulation/demodulation unit 27a/b" über die Spannungsversorgungsleitungen übertragen werden. Es werden also Daten über einen ersten Kanal und einen zweiten Kanal übertragen. Dadurch werden gegenüber einem voll redundant ausgelegten Fahrzeugnetzwerk Leitungen eingespart.

Die Patentanmeldung DE 103 01 637 A1 beschäftigt sich mit mehrkanaliger Datenübertragung, wobei die Spannungsversorgungsleitungen zur Datenübertragung genutzt werden sollen. Es werden jedoch "separate Kanäle" verwendet, welche sich z.B. durch Verwendung orthogonaler Codes grundsätzlich nicht gegenseitig beeinflussen.

Aufgabe der vorliegenden Erfindung ist es, ein verbessertes Verfahren für den Zugriff einer Teilnehmerstation eines Bussystems auf einen zweiten Kanal eines Bussystems parallel zu dem von mehreren Teilnehmerstationen gemeinsam genutzten ersten Kanal anzugeben, bei dem gegenseitige Störungen zwischen den Kanälen und / oder elektromagnetische Abstrahlungen reduziert werden. Diese Aufgabe wird durch ein Datenübertragungsverfahren mit den Merkmalen des Anspruchs 1 gelöst.

Auch bei Realisierung des erfindungsgemäßen Verfahrens ist vorgesehen, eine Hochfrequenz (HF)-Kommunikation über ein beliebiges Bussystem, beispielsweise einen CAN-Bus, mit einem beliebigen Zugriffsprotokoll durchzuführen, wobei der Zugriff auf den von mehreren Teilnehmerstationen zur HF-Kommunikation genutzten zweiten Kanal nach einem beliebigen Zugriffsverfahren gesteuert wird. Über den ersten Kanal zu übertragende erste Daten und über den zweiten Kanal zu übertragende zweite Daten werden über eine gemeinsame Signalleitung übertragen. Es ist denkbar, dass es sich hierbei um eine Busleitung eines bekannten Bussystems, insbesondere des CAN, handelt, über die Daten des ersten Kanals gemäß den Protokollen des CAN übertragen werden. Dies hat den Vorteil, dass herkömmliche Teilnehmerstationen, die beispielsweise die bekannten Protokolle des CAN beherrschen, problemlos an das Bussystem angeschlossen werden können, das mit dem erfindungsgemäßen Verfahren betrieben wird. Insofern handelt es sich bei dem vorgeschlagenen Verfahren um eine Erweiterung der Protokolle des CAN, die kompatibel zu den bekannten Protokollen und Geräten des CAN ist.

Hierbei ist bevorzugt, dass in Abhängigkeit von den ersten Daten ein Datensignal und in Abhängigkeit von den ersten Daten und den zweiten Daten ein Modulationssignal gebildet werden und dass das Datensignal mit dem Modulationssignal überlagert wird. Als Modulationsverfahren zum Bilden des Modulationssignal kann beispielsweise eine Frequenzmodulation, insbesondere eine Frequenzumtastung in Abhängigkeit von einem logischen Zustand (0 oder 1) des zweiten Kanals, verwendet werden. Es ist auch denkbar, eine Phasenmodulation, beispielsweise eine binäre Phasenmodulation (Binary Phase Shift Keying, BPSK) vorzusehen.

Besonders bevorzugt ist es, damit die Übertragung der ersten Daten über den zweiten Kanal nicht durch die gleichzeitig ablaufende Übertragung der zweiten Daten über den zweiten Kanal gestört wird, dass das verwendete Modulationsverfahren, beziehungsweise dessen Parameter und / oder charakteristische Kenngrößen abhängig von den ersten Daten beziehungsweise dem daraus gebildeten Datensignal angepasst werden.

Ebenfalls bevorzugt ist es, dass das Modulationssignal abhängig von den ersten Daten beziehungsweise dem daraus gebildeten Datensignal an bestimmten Zeitpunkten unterbrochen oder abgeschwächt wird.

Vorzugsweise ist die Teilnehmerstation zum Ausführen des erfindungsgemäßen Verfahrens eingerichtet, so dass sie dessen Vorteile realisiert.

Weitere Merkmale und Vorteile der Erfindung ergeben sich aus der nachfolgenden Beschreibung, in welcher exemplarische Ausführungsformen der Erfindung anhand der Zeichnung näher erläutert werden. Dabei zeigen:
- Figur 1: eine schematische Darstellung eines Bussystems mit mehreren Teilnehmerstationen;
- Figur 2: eine schematische Darstellung der relevanten Teile einer der Teilnehmerstationen aus Figur 1;
- Figur 3: eine schematische Darstellung eines Teils einer Teilnehmerstation aus Figur 1 gemäß einer bevorzugten Ausführungsform der Erfindung;
- Figur 4: einen beispielhaften zeitlichen Verlauf der Belegung eines Kanals des Bussystems; und
- Figur 5: einen zeitlicher Verlauf der Kanalbelegung während der Übertragung einer Nachricht über den Kanal.

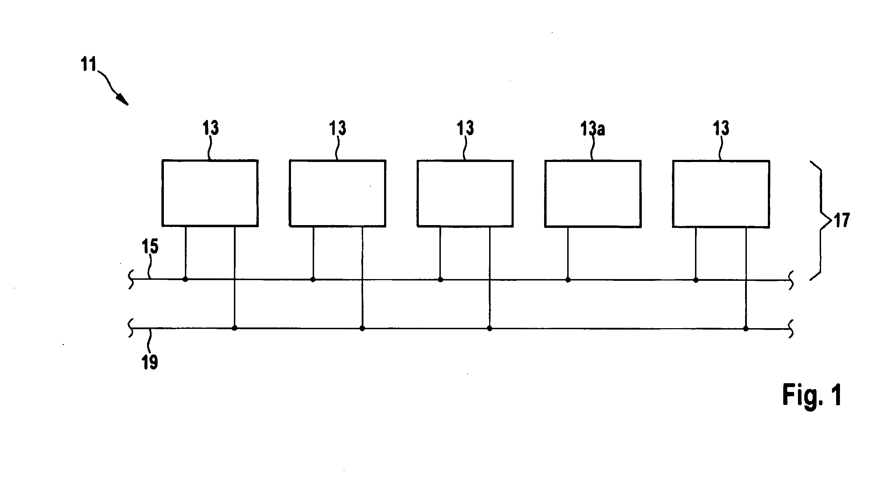

**Figur 1** zeigt eine Übersicht über ein Bussystem 11 eines Kraftfahrzeugs, das mehrere Teilnehmerstationen 13, 13a und einen von diesen Teilnehmerstationen 13, 13a gemeinsam genutzten ersten Kanal 15 umfasst. In den gezeigten Ausführungsbeispielen bilden die Teilnehmerstationen 13, 13a und der erste Kanal 15 eine CAN-Domäne 17. Allerdings lässt sich die vorliegende Erfindung nicht nur auf CAN, sondern auch auf andere Arten von Kommunikationsnetzen anwenden. Dabei ist es vorteilhaft, jedoch nicht zwangsläufige Voraussetzung, wenn bei den verwendeten Kommunikationsnetzen zumindest für bestimmte Zeitspannen ein exklusiver, kollisionsfreier Zugriff einer Station auf einen gemeinsamen Kanal gewährleistet ist. Bei den Teilnehmerstationen 13, 13a kann es sich beispielsweise um Steuergeräte oder Anzeigevorrichtungen des Kraftfahrzeugs handeln.

Ein Teil der Teilnehmerstationen 13 ist an einen von diesem Teil der Teilnehmerstationen 13 gemeinsam genutzten zweiten Kanal 19 angeschlossen. Im gezeigten Ausführungsbeispiel sind alle Teilnehmerstationen 13 bis auf die Teilnehmerstation 13a an beide Kanäle 15, 19 angeschlossen. Bei dieser Teilnehmerstation 13a handelt es sich um eine herkömmliche Teilnehmerstation 13a, die zwar die Protokolle des CAN beherrscht, jedoch nicht zum Ausführen eines erfindungsgemäßen Verfahrens eingerichtet ist. Die anderen Teilnehmerstationen 13 sind gemäß der Erfindung um zusätzliche Funktionen erweitert, so dass sie zusätzlich über den zweiten Kanal 19 kommunizieren können. Bei dem in der Figur 1 gezeigten Bussystem 11 können somit herkömmliche Teilnehmerstationen 13a und die erweiterten Teilnehmerstationen 13 miteinander verbunden werden. Es können auch mehrere herkömmliche Teilnehmerstationen 13a in dem Bussystem vorgesehen werden; es ist jedoch auch denkbar, in dem Bussystem 11 lediglich die erweiterten Teilnehmerstationen 13 vorzusehen, welche an beide Kanäle 15, 19 angeschlossen sind.

Die vorliegende Erfindung wird nachfolgend anhand eines im CAN-Bus verwendeten Medienzugriffssteuerverfahren bzw. -protokoll erläutert. Selbstverständlich ist die Erfindung jedoch nicht auf solche Zugriffsverfahren beschränkt, sondern kann vielmehr mit beliebigen Medienzugriffssteuerverfahren und -protokollen verwendet werden.

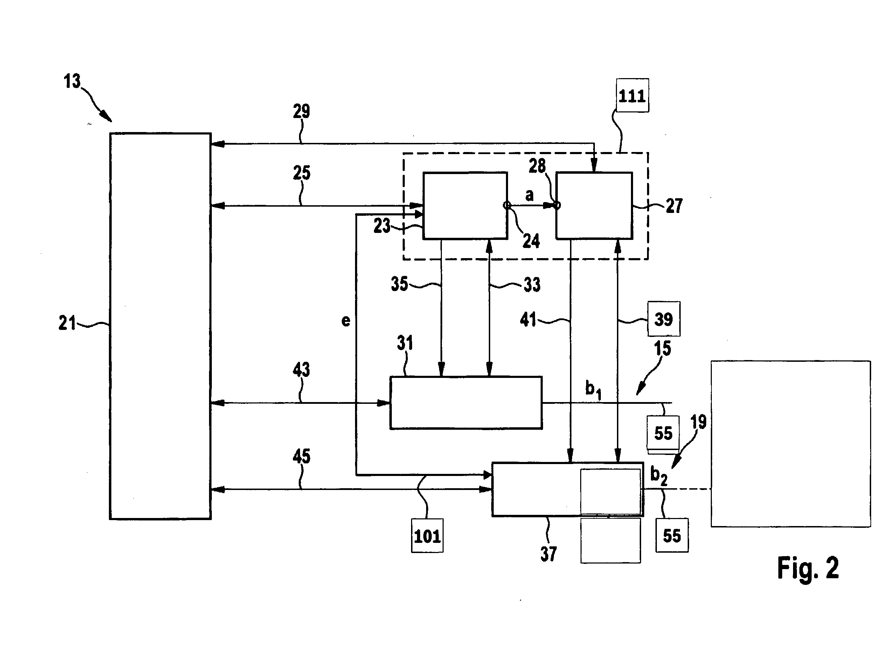

**Figur 2** zeigt eine erweiterte Teilnehmerstation 13 im Detail. Diese Teilnehmerstation 13 weist einen Mikrocomputer 21 auf, der beispielsweise als ein Mikrocontroller ausgebildet sein kann. An den Mikrocomputer 21 ist ein erstes Steuerelement der Teilnehmerstation in Form eines CAN-Controllers 23 über eine erste Verbindung 25 angebunden. Außerdem weist die Teilnehmerstation 13 ein zweites Steuerelement in Form eines Kommunikationscontrollers 27, der über eine zweite Verbindung 29 mit dem Mikrocomputer 21 verbunden ist. Die beiden Verbindungen 25, 29 sind zum Austausch von über das Bussystem 11 zu übertragenden Daten sowie von Konfigurations-, Steuer- und Statusinformationen zwischen dem Mikrocomputer 21 und den beiden Steuerelementen 23, 27 eingerichtet. Der Kommunikationscontroller 27 ist mit dem CAN-Controller 23 derart gekoppelt, dass der CAN-Controller mittels eines von ihm erzeugten Zugriffssteuersignals a den Kommunikationscontroller 27 steuern kann. Hierzu ist ein Steuereingang 28 des Kommunikationscontrollers 27 an einen Steuerausgang 24 des CAN-Controllers 23 angeschlossen.

Des Weiteren weist die Teilnehmerstation 13 eine erste Medienanschlusseinheit auf, die als ein CAN-Transceiver 31 ausgebildet ist. Der CAN-Transceiver 31 ist derart mit dem CAN-Controller 23 verbunden, dass über die CAN-Domäne 17, das heißt den ersten Kanal 15 zu übertragende erste Daten zwischen dem CAN-Controller 23 und dem CAN-Transceiver 31 ausgetauscht werden können (Pfeil 33). Des Weiteren ist der CAN-Transceiver 31 so an den CAN-Controller 23 angebunden, dass der CAN-Controller 23 Steuersignale an den CAN-Transceiver 31 übertragen kann (Pfeil 35). Der CAN-Transceiver 31 ist an den ersten Kanal 15 angeschlossen.

Ferner weist die Teilnehmerstation 13 eine zweite Medienanschlusseinheit 37 auf, die an den Kommunikationscontroller 27 zum Übertragen von über den zweiten Kanal 19 zu übertragende Daten (Pfeil 39) sowie zum Übertragen von Steuersignalen (Pfeil 41) zwischen dem Kommunikationscontroller 27 und der zweiten Medienanschlusseinheit 37 angebunden ist. Die zweite Medienanschlusseinheit 37 ist an den zweiten Kanal 19 angeschlossen. Die Medienanschlusseinheit 37 ist mit dem CAN-Controller 23 derart gekoppelt, dass der CAN-Controller 23 mittels eines von ihm erzeugten Eigenschaftssteuersignals e die Eigenschaften der Medienanschlusseinheit 37 beeinflussen kann. Hierzu ist ein Steuereingang der Medienanschlusseinheit 37 mit einem Steuerausgang des CAN-Controllers 23 über die Steuerleitung 101 verbunden.

Eine andere, in Figur 2 nur angedeutete Variante wäre, die Funktionen des CAN-Controller 23 und des weiteren Kommunikationscontroller 27 in einem erweiterten CAN-Controller 111 zusammenzuführen. In diesem Fall entfielen der Steuereingang 28 und der Steuerausgang 24, die Zugriffssteuerung würde nicht durch ein entsprechendes Signal a, sondern durch interne Steuerung beziehungsweise Abstimmung der im erweiterten CAN-Controller 111 ablaufenden Prozesse erfolgen. Das Eigenschaftssteuersignal e könnte gegebenenfalls über die Verbindungen 39 und 41 übertragen werden und die eigens hierfür vorgesehene Steuerleitung 101 könnte entfallen.

Außerdem können die beiden Medienanschlusseinheiten 31, 37 an den Mikrocomputer 21 angebunden sein, so dass der Mikrocomputer 21 die beiden Medienanschlusseinheiten 31, 37 steuern kann und Statusinformationen aus den beiden Medienanschlusseinheiten 31, 37 auslesen kann (siehe Pfeile 43 und 45). Eine solche Anbindung des Mikrocomputers 21 an die Medienanschlusseinheiten 31, 37 ist jedoch fakultativ, die Erfindung kann auch ohne eine solche Anbindung realisiert werden.

Für die genaue Ausgestaltung des Kommunikationscontrollers 27 und der zweiten Medienanschlusseinheit 37 bestehen hohe Freiheitsgrade. Es ist lediglich erforderlich, dass der Kommunikationscontroller 27 und die zweite Medienanschlusseinheit 37 eine Übertragungseinrichtung zum Übertragen von zweiten Daten zwischen den erweiterten Teilnehmerstationen 13 bereitstellt. Ein Protokoll zum Steuern des Medienzugriffs auf den zweiten Kanal (Media Access Control Protocol, MAC-Protokoll) muss über den zweiten Kanal 19 nicht ausgeführt werden. Es kann als zweite Medienanschlusseinheit 37 beispielsweise ein Transceiver für das Kommunikationssystem "FlexRay" oder für lokale Rechnernetze, wie beispielsweise "Ethernet" verwendet werden. Hierdurch kann beispielsweise eine Bitrate von 10 Mbit/s oder 100 Mbit/s auf dem zweiten Kanal 19 realisiert werden.

Ist das Zugriffssteuersignal a aktiv, das heißt der Zugriff auf den zweiten Kanal 19 freigegeben, dann gibt im Falle der in Figur 2 gezeigten Ausführungsform in der sendenden Teilnehmerstation 13 die zweite Medienanschlusseinheit 37 den zweiten Bitstrom oder Datenstrom b₂ an die Signalleitung 55 ab. Bei den empfangenden Teilnehmerstationen 13 demoduliert die zweite Medienanschlusseinheit 37 das von der sendenden Teilnehmerstation 13 abgegebene modulierte Signal und rekonstruiert dadurch den gesendeten Bitstrom beziehungsweise Datenstrom b₂ und gibt die enthaltenen zweiten Daten an den Kommunikationscontroller 27 weiter. Bei dem in der Figur 2 gezeigten Ausführungsbeispiel nutzen der erste Kanal 15 und der zweite Kanal 19 für die Übertragung der Daten eine gemeinsame Signalleitung 55, wobei hierzu die Medienanschlusseinheit 37 eine nicht näher bezeichnete Koppeleinrichtung zur Einkopplung der Signale auf die gemeinsame Signalleitung 55 umfasst. Die erfindungsgemäße Beeinflussung der Charakteristik der Medienanschlusseinheit 37 erfolgt über ein Eigenschaftssteuersignal e auf einer Steuerungsleitung 101 zwischen CAN-Controller 23 und Medienanschlusseinheit 37. Diese kann beispielsweise so ausgeprägt sein, dass als Eigenschaftssteuersignal e der logische Zustand des RxD-Eingang des CAN-Controllers 23 an die Medienanschlusseinheit 37 übermittelt wird und abhängig vom logischen Zustand ("1" oder "0") der Kommunikation auf dem ersten Kanal 15 die Medienanschlusseinheit 37 mit unterschiedlichen Eigenschaften die Buspegel der Signalleitung 55 für die Kommunikation auf dem zweiten Kanal 19 treibt. Soll auf dem ersten Kanal 15 eine logische "0" übertragen werden, wird nach dem CAN-Protokoll ein dominanter Buspegel mit einer Differenz-Spannung zwischen den beiden Leitungen von nominell 2 Volt eingestellt. Wird eine "1" übertragen, stellt sich über die Abschlusswiderstände der rezessive Buspegel mit einer Differenz-Spannung von 0 Volt ein. Die Medienanschlusseinheit 37 berücksichtigt die unterschiedlichen Dämpfungseigenschaften oder die veränderliche Impedanz des Bussystems in diesen beiden Zuständen und optimiert den Bitstrom oder Datenstrom b₂, der auf dem zweiten Kanal 19 übertragen wird so, dass Störungen der Kommunikation auf dem ersten Kanal 15, sowie elektromagnetische Abstrahlungen minimiert werden.

Beispielsweise kann die von der Medienanschlusseinheit 37 eingestellte Stromstärke zur Erzeugung des Bitstroms oder Datenstroms b₂ abhängig von der Busimpedanz in der Form gesteuert werden, dass Spannungsüberhöhungen bei wechselnder, insbesondere schnell ansteigender Busimpedanz vermieden werden. Hierdurch können beispielsweise elektromagnetische Abstrahlungen vermindert werden.

Alternativ kann eine Umschaltung beziehungsweise Anpassung der Medienanschlusseinheit 37 über die Kommunikationsleitung 45 vom Mikrocomputer 21 gesteuert werden.

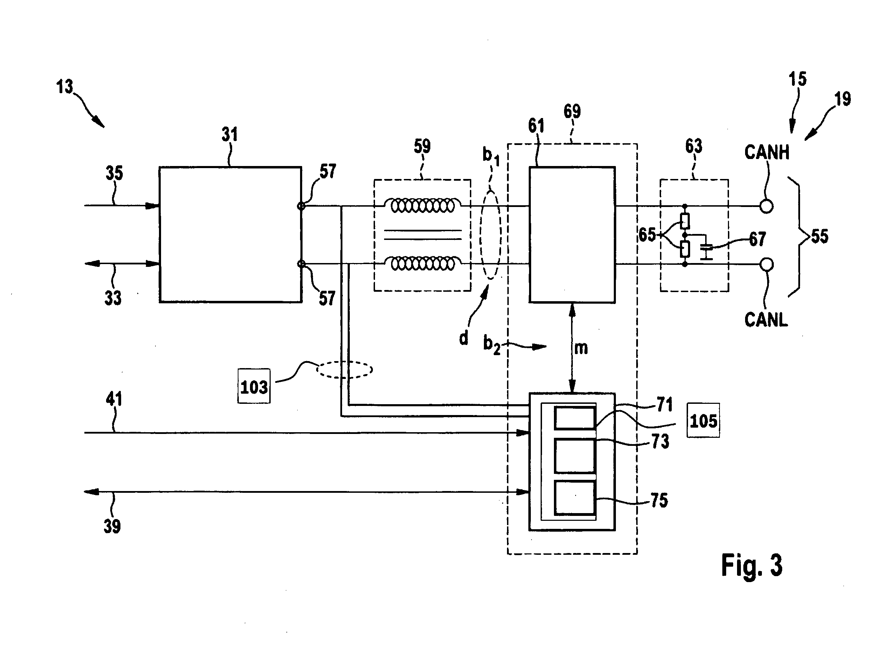

In **Figur 3** ist eine weitere bevorzugte Ausführungsform der vorliegenden Erfindung dargestellt, bei der erneut für die beiden Kanäle 15, 19 eine gemeinsame Signalleitung 55 vorgesehen ist. Die gemeinsame Signalleitung 55 umfasst in diesem Beispiel ein Leiterpaar bestehend aus einem ersten Leiter CANH und einem zweiten Leiter CANL. In der gezeigten Ausführungsform handelt es sich bei der gemeinsamen Signalleitung 55 um eine herkömmliche für ein auf CAN basierendes Bussystem geeignete Busleitung.

Wie aus Figur 3 ersichtlich ist, ist auch bei einer Teilnehmerstation 13, die zum Anschluss an die gemeinsame Signalleitung 55 ausgelegt ist, der CAN-Transceiver 31 vorhanden. Dieser ist über die Leitungen 33, 35 an den CAN-Controller 23 angeschlossen. An zwei Busanschlüssen 57 des CAN-Transceivers 31 ist eine Gleichtaktdrossel 59 angeordnet. Zwischen der Gleichtaktdrossel 59 und dem Leiterpaar CANH, CANL der gemeinsamen Signalleitung 55 befindet sich ein Koppelelement 61. Das Koppelelement 61 kann auch mit der Gleichtaktdrossel 59 kombiniert werden, um die Hochfrequenz-Signale induktiv ein- bzw. auskoppeln zu können und den Hochfrequenz-Teil des Teilnehmers 13 galvanisch vom CAN-Bus 55 zu entkoppeln. Außerdem ist zwischen dem ersten Leiter CANH und dem zweiten Leiter CANL eine Busabschlussschaltung 63 angeordnet, die zwei in Serie geschaltete Abschlusswiderstände 65 aufweist, wobei die äußeren Enden dieser Serienschaltung an die Leiter CANH, CANL angeschlossen sind und ein Mittelabgriff dieser Serienschaltung über eine Kapazität 67 mit Masse verbunden ist. In einer nicht gezeigten Ausführungsform ist die Gleichtaktdrossel 59 und/oder die Busabschlussschaltung 63 nicht vorgesehen.

Das Koppelelement 61 gehört zu einer Anschlussschaltung 69 der Teilnehmerstation 13, die in der in Figur 3 gezeigten Ausführungsform anstelle der zweiten Medienanschlusseinheit 37 vorgesehen ist. Ein Modem 71 der Anschlussschaltung 69 kann einerseits mit dem Mikrocomputer 21 verbunden sein und ist andererseits an das Koppelelement 61 angeschlossen. Das Modem 71 weist einen Modulator 73 zum Erzeugen eines in Abhängigkeit von dem zweiten Bitstrom oder Datenstrom b₂ modulierten Signals m auf. Ferner weist das Modem 71 einen Demodulator 75 zum Demodulieren des von einer anderen Teilnehmerstation 13 über die gemeinsame Signalleitung 55 gesendeten modulierten Signals m auf. Des weiteren ist das Modem 71 über eine Signalverbindung 103 mit den Busanschlüssen 57 des CAN-Transceivers 31 verbunden und weist eine Anpassungseinheit 105 auf, die eingerichtet ist, abhängig von beispielsweise über die Signalverbindung 103 ermittelten Informationen über den ersten Datenkanal 15 oder den auf diesem ersten Kanal 15 übermittelten Bitstrom b₁ eine oder mehrere Eigenschaften des Modems anzupassen.

In diesem Beispiel kann das Modem 71 über die hierfür geeigneten Verbindungen 103 die Leitungspegel der beiden Busleitungen (CANH, CANL) feststellen beziehungsweise abtasten. Hierzu beinhaltet in diesem Beispiel die Anpassungseinheit 105 in dem Modem 71 eine Komparatorschaltung. Die Abtastung kann an verschiedenen Stellen zwischen den Busanschlüssen 57 des CAN-Transceivers 31 und den Anschlüssen an die Leiter CANH, CANL durchgeführt werden. Um Rückwirkungen oder Rückkopplungen des auf dem zweiten Kanal 19 gesendeten Signals auf das über die Verbindung 103 abgetastete Signal zu vermeiden, ist es vorteilhaft, zwischen der gegebenenfalls vorhandenen Gleichtaktdrossel 59 und den Anschlüssen 57 abzutasten. Im dargestellten Beispiel erfolgt die Abtastung direkt vor den Anschlüssen 57. Das Modem kann dann beispielsweise so ausgeprägt werden, dass das Modulationssignal m, das aus den vom Kommunikationscontroller 27 bereitgestellten Daten zur Übertragung auf dem zweiten Kanal 19 erzeugt wird, abhängig von den ersten Daten b₁ oder dem daraus gebildeten Datensignal d oder dem festgestellten Leitungspegel der beiden Busleitungen (CANH, CANL) an bestimmten Zeitpunkten unterbrochen oder abgeschwächt wird.

Es wäre auch möglich, im Modem 71 eine Logik vorzusehen, die bei Erkennen einer Störung des zweiten Kanals 19, insbesondere einer Einstreuung von Signalen im gleichen Frequenzbereich aufgrund der Antennenfunktion der Signalleitung 55, das Modulationssignal m unterbricht und die Kommunikation über den zweiten Kanal 19 beziehungsweise das Senden des Modulationssignals m erst nach Abklingen der Störung wieder aufnimmt. Hierzu wäre es vorteilhaft, die Abtastung zwischen der gegebenenfalls vorhandenen Gleichtaktdrossel 59 und den Anschlüssen an die Leiter CANH, CANL durchzuführen.

Bei der in der Figur 3 gezeigten Ausführungsform erzeugt der Modulator 73 des Modems 71 der sendenden Teilnehmerstation 13 in Abhängigkeit von den zweiten Daten b₂, die der Kommunikationscontroller 27 an die Anschlussschaltung 69 übermittelt hat, das modulierte Signal m. Das Koppelelement 61 überlagert ein vom CAN-Transceiver 31 in Abhängigkeit von dem ersten Bitstrom b₁ erzeugtes Datensignal d mit dem in Abhängigkeit von dem zweiten Bitstrom beziehungsweise Datenstrom b₂ modulierten Signal m. Der Modulator 73 verwendet für die Erzeugung des modulierten Signals m hierbei Informationen über das Datensignal d oder den ersten Bitstrom b₁. Er ist hierfür über die Verbindung 103 mit den Busanschlüssen 57 des CAN-Transceivers 31 verbunden und wertet diese über eine in der Anpassungseinheit 105 enthaltene Komparatorschaltung aus. Das auf diese Weise durch das Datensignal d beeinflusste Modulationssignal m gibt das Koppelelement 61 als Überlagerung zum Datensignal d an die beiden Leiter CANH und CANL der gemeinsamen Signalleitung 55 aus. Bei den empfangenden Teilnehmerstationen 13 gibt das Koppelelement 61 ein über die beiden Leiter CANH und CANL empfangenes Signal über die wahlweise vorhandene Gleichtaktdrossel 59 an den CAN- Transceiver 31 weiter und führt es dem Demodulator 75 des Modems 71 zu. Der CAN-Transceiver 31 extrahiert aus dem empfangenen Signal den ersten Bitstrom b₁ und gibt diesen an den CAN-Controller 23 weiter. In entsprechender Weise ermittelt der Demodulator 75 aus dem empfangenen Signal den zweiten Bitstrom oder Datenstrom b₂. Dadurch, dass die wahlweise vorhandene Gleichtaktdrossel 59 zwischen dem CAN-Transceiver 31 und dem Koppelelement 61 angeordnet ist, wird vermieden, dass die Gleichtaktdrossel 59 das modulierte Signal m innerhalb eines Signalpfades zwischen den Modems 71 zweier an die gemeinsame Signalleitung 55 angeschlossener Teilnehmerstationen 13 dämpft.

In der gezeigten Ausführungsform verwendet das Modem 71 als Modulationsverfahren eine Frequenzumtastung in Abhängigkeit des Werts der einzelnen zeitlich aufeinanderfolgenden Bits des zweiten Bitstroms b₂. Die Anzahl der pro Zeit übertragenen Bits ist natürlich abhängig von den für dieses Verfahren gewählten Frequenzen. Die Übertragung kann hierbei unabhängig von den Bitgrenzen des ersten Bitstroms b₁ ausgeführt werden, sie kann aber auch synchronisiert zu den Bitgrenzen verlaufen, wie weiter unten ausgeführt wird. Die Amplitude des Modulationssignals m muss so gewählt werden, dass sie einerseits über dem Rausch-Niveau des verwendeten Übertragungsmediums oder der Signalleitung 55 liegt, andererseits aber klein genug, so dass der CAN-Transceiver 31 die bei ihm ankommenden, gegebenenfalls durch die Gleichtaktdrossel 59 abgedämpften Signale nicht als Flanken beziehungsweise Wechsel zwischen den beiden möglichen CAN-Buspegeln ansieht.

Abweichend hiervon kann anstelle der Frequenzumtastung auch eine Phasenmodulation oder ein beliebig anderes Modulationsverfahren angewendet werden, beispielsweise eine Multiträger Modulation wie OFDM (Orthogonal Frequency Division Multiplex), welche mehrere orthogonale Trägersignale zur Übertragung verwendet.

Das Koppelelement 61 kann im einfachsten Fall als ein Widerstandsnetzwerk ausgebildet sein. Es kann jedoch auch vorgesehen werden, dass das Koppelelement 61 ein oder mehrere Filter zum Trennen des dem CAN-Transceiver 31 zuzuführenden Datensignal d vom modulierten Signal m aufweist. Des weiteren wäre es denkbar, dass das Koppelelement 61 mit der Gleichtaktdrossel 59 kombiniert wird, für die Gleichtaktdrossel 59 also statt einer einfachen Induktivität mit vier Anschlüssen eine Induktivität mit sechs oder mehr Anschlüssen verwendet wird. Auf diese Weise kann das HF-Signal induktiv ein- bzw. ausgekoppelt werden und der HF-Teil ist galvanisch vom CAN-Bus entkoppelt. Außerdem ergeben sich dadurch Kostenvorteile.

Zur Minimierung der Störungen der Kommunikation auf dem ersten Kanal 15 kann es besonders sinnvoll sein, jeweils zu den Zeitpunkten an der Grenze zwischen zwei Bits des Bitstroms b₁, an denen Flanken des Buspegels zu erwarten sind, das über den zweiten Kanal 19 gesendete Modulationssignal m herunterzufahren, zu dämpfen oder zu unterbrechen. Dies kann entweder an allen Bitgrenzen erfolgen, oder auch nur für den Fall, dass tatsächlich eine Flanke, das heisst ein Wechsel von dominantem auf rezessiven oder von rezessivem auf dominanten Buspegel erfolgen wird. Verwendet man das weiter oben angesprochene Modulationsverfahren mit Frequenzumtastung, so können abhängig von den für das Verfahren gewählten Frequenzen auf diese Weise ein oder mehrere zusätzliche Bits zwischen den Grenzen eines übertragenen Bits des ersten Bitstroms b₁ hinzugefügt werden. Auch hier ist die Amplitude des Modulationssignals m so zu wählen, dass sie über dem Rausch-Niveau des verwendeten Übertragungsmediums oder der Signalleitung 55 liegt, aber nicht vom CAN-Transceiver 31 als Flanke beziehungsweise Wechsel des Buspegels angesehen wird.

Durch eine in der vorgesehenen Anpassungseinheit 105 enthaltene oder davon getrennt vorzusehende Logik kann das Modem 71 dafür eingerichtet werden, dass es sich selbständig auf den Bustakt des seriellen Bitstroms b₁, der über den ersten Kanal 15 auf der Signalleitung 55 übertragen wird, synchronisiert und dann die entsprechende Anpassung, Dämpfung oder Unterbrechung des Modulationssignals m an den Bitgrenzen ausführen kann.

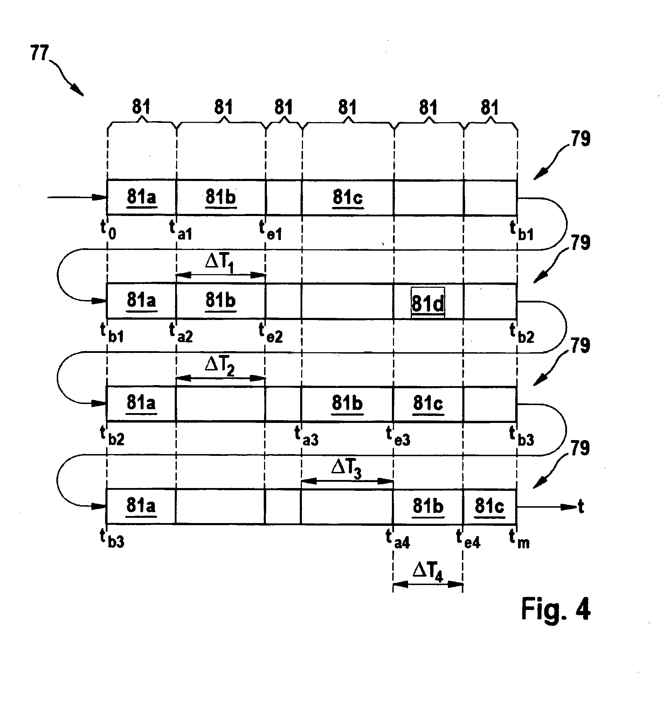

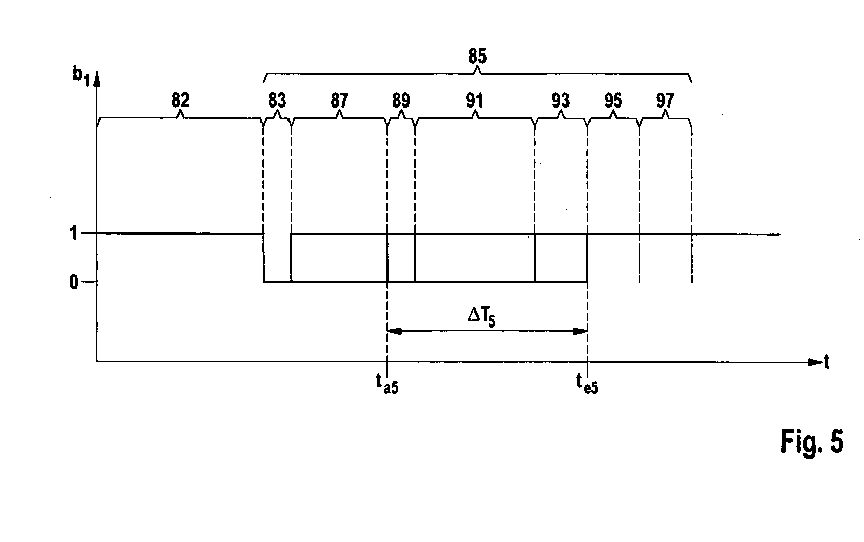

Anhand der **Figuren 4** **und** **5** wird die Funktionsweise der Teilnehmerstationen 13 und des Bussystems 11 in einem weiteren Ausführungsbeispiel näher erläutert. Beim Betrieb des Bussystems 11 steuern die Mikrocomputer 21 der einzelnen Teilnehmerstationen 13 die einzelnen CAN-Controller 23 und CAN-Transceiver 31 so, dass gemäß den Protokollen des CAN zwischen den Teilnehmerstationen 13, 13a Nachrichten ausgetauscht werden können, indem Rahmen, die die Nachrichten enthalten, über den ersten Kanal 15 übertragen werden.

In der gezeigten Ausführungsform unterstützen die einzelnen Teilnehmerstationen 13 die Erweiterung TTCAN. Gemäß TTCAN wird die Zeit in sich regelmäßig wiederholende Gesamtzyklen unterteilt. Ein solcher Gesamtzyklus 77 ist in **Figur 4** schematisch dargestellt. Der Gesamtzyklus 77 beginnt zum Zeitpunkt t₀ und endet zum Zeitpunkt tₘ. Man erkennt, dass der Gesamtzyklus 77 wiederum in mehrere Basiszyklen 79 unterteilt ist. Bei der gezeigten Ausführungsform ist der Gesamtzyklus 77 in vier Basiszyklen 79 unterteilt. Der erste Basiszyklus 79 (in Figur 4 oben eingezeichnet) beginnt zum Zeitpunkt t₀ und endet zu einem Zeitpunkt t_{b1}. Zu diesem Zeitpunkt t_{b1} beginnt auch der auf den ersten Basiszyklus 79 folgende zweite Basiszyklus 79, der zu einem Zeitpunkt t_{b2} endet. In entsprechender Weise beginnt der dritte Basiszyklus zum Zeitpunkt t_{b2} und endet zu einem Zeitpunkt t_{b3}. Der vierte Basiszyklus beginnt zum Zeitpunkt t_{b3} und endet zu dem Zeitpunkt tₘ und beendet somit den Gesamtzyklus 77.

Die einzelnen Basiszyklen 79 sind in mehrere, in der gezeigten Ausführungsform in sechs Zeitfenster 81 unterteilt, wobei die Unterteilung der Basiszyklen 79 in die Zeitfenster 81 für jeden Basiszyklus 79 identisch ist. Durch die Gesamtzyklen 77 wird eine sich regelmäßig wiederholende Zeitfensterstruktur definiert, die aufgrund der identischen Unterteilung der einzelnen Basiszyklen 79 in die Zeitfenster 81 einen matrixartigen Aufbau aufweist und somit üblicherweise als Kommunikationsmatrix bezeichnet wird.

Ein erstes Zeitfenster 81a ist für die Übertragung von Referenznachrichten über den ersten Kanal 15 vorgesehen. Die Referenznachrichten dienen insbesondere zur Synchronisation der einzelnen Teilnehmerstationen 13 untereinander, so dass die zeitliche Lage der einzelnen Zeitfenster 81 aus Sicht der einzelnen Teilnehmerstationen 13 zumindest im Wesentlichen gleich ist. Ein Teil der Zeitfenster 81 ist einem bestimmten Nachrichtentyp zugewiesen, das heißt innerhalb dieser Zeitfenster 81 werden ausschließlich Datenrahmen mit einer bestimmten Kennung übertragen. Es kann beispielsweise vorgesehen werden, dass diese mit 81b bezeichneten Zeitfenster 81 zum Übertragen der Nachricht des bestimmten Typs reserviert sind. Weiter finden sich in der Figur 4 Zeitfenster, die mit 81c bezeichnet sind, innerhalb derer Nachrichten eines beliebigen Typs übertragen werden dürfen, sowie Zeitfenster, die mit 81 d bezeichnet sind, in denen über den ersten Kanal 15 keine Kommunikation stattfindet.

Da bei CAN eine Nachricht eines bestimmten Typs, das heißt mit einer bestimmten Kennung, nur von einer Teilnehmerstation 13 erzeugt werden kann, sind die Zeitfenster 81b dieser Teilnehmerstation 13 exklusiv zugewiesen. Das heißt, zu einem Anfangszeitpunkt tₐ₁, tₐ₂, tₐ₃ beziehungsweise tₐ₄ beginnt ein Freigabeintervall ΔT₁, ΔT₂, ΔT₃ beziehungsweise ΔT₄, innerhalb dessen diese Teilnehmerstation 13 exklusiven Zugriff auf den ersten Kanal 15 hat. Das Freigabeintervall ΔT₁, ΔT₂, ΔT₃ beziehungsweise ΔT₄ endet jeweils am Ende des zugehörigen Zeitfensters 81b, das heißt zu dem Zeitpunkt tₑ₁, tₑ₂, tₑ₃ beziehungsweise tₜₑ₄. In der gezeigten Ausführungsform entspricht das Freigabeintervall ΔT₁, ΔT₂, ΔT₃ beziehungsweise ΔT₄ dem jeweiligen Zeitfenster 81 b des Gesamtzyklusses. Abweichend hiervon kann jedoch auch vorgesehen werden, dass das Freigabeintervall lediglich ΔT₁, ΔT₂, ΔT₃ beziehungsweise ΔT₄ einem Teil des jeweiligen Zeitfensters 81b entspricht. Wesentlich für die Funktion des erfindungsgemäßen Verfahrens ist, dass das das Freigabeintervall ΔT₁, ΔT₂, ΔT₃ beziehungsweise ΔT₄ in zeitlicher Hinsicht vollständig von einem Zeitfenster 81 b oder von mehreren unmittelbar aufeinander folgenden Zeitfenster 81 b abgedeckt wird.

Jede Teilnehmerstation 13 erfasst die Zeitpunkte t₀, t_{b1}, t_{b2}, t_{b3}, zu denen die einzelnen Referenznachrichten empfangen werden und berechnet die zeitliche Lage zumindest derjenigen Zeitfenster 81, innerhalb denen sie auf den Bus zugreifen möchte. Die Teilnehmerstation 13, die zum Versenden derjenigen Nachrichten zuständig ist, denen das Zeitfenster 81 b zugewiesen ist, berechnet die Lage des in Figur 4 eingezeichneten Freigabeintervalls ΔT₁, ΔT₂, ΔT₃ beziehungsweise ΔT₄. In der gezeigten Ausführungsform nimmt der CAN-Controller 23 diese Berechnungen vor. Es kann jedoch auch vorgesehen werden, dass diese Berechnungen vom Mikrocomputer 21 durchgeführt werden. Der CAN-Controller 23 erzeugt das Zugriffssteuersignal a und leitet dies dem Kommunikationscontroller 27 zu (siehe Figur 2). Darüber hinaus erzeugt der CAN-Controller 23 ein Eigenschaftssteuersignal e und leitet dieses über die Steuerungsleitung 101 der Medienanschlusseinheit 37 zu.

Das Zugriffssteuersignal a ist immer innerhalb des Freigabeintervalls ΔT₁, ΔT₂, ΔT₃ beziehungsweise ΔT₄ aktiv. Der Kommunikationscontroller 27 wertet das Zugriffssteuersignal a aus und greift nur dann auf den zweiten Kanal 19 zu, wenn das Zugriffssteuersignal a aktiv ist. Ist das Zugriffssteuersignal a nicht aktiv, dann hält der Kommunikationscontroller 27 den zweiten Kanal 19 frei, so dass andere Teilnehmerstationen 13 auf den zweiten Kanal 19 zugreifen können. Die Teilnehmerstationen 13 sind also so eingerichtet, dass der CAN-Controller 23 in Abhängigkeit von dem in der CAN-Domäne ausgeführten Zugriffssteuerungsverfahren den Kommunikationscontroller 27 derart steuert, dass der Kommunikationscontroller 27 auf den zweiten Kanal 19 nur dann zugreift, wenn gemäß dem Medienzugriffsteuerungsverfahren der CAN-Domäne 17 auch ein Zugriff auf den ersten Kanal 15 erlaubt ist, und dass der CAN-Controller 23 die Eigenschaften beziehungsweise die Charakteristik der auf dem zweiten Kanal 19 übertragenen Signale abhängig von den auf dem ersten Kanal 15 übertragenen Daten durch das Eigenschaftssteuersignal e anpasst.

Ferner sind innerhalb des Gesamtzyklus 77 weitere Zeitfenster 81c vorgesehen, innerhalb derer Nachrichten eines beliebigen Typs übertragen werden dürfen. Innerhalb dieser Zeitfenster 81 c ist der exklusive Zugriff einer bestimmten Station auf den ersten Kanal nicht garantiert. Deshalb wird innerhalb der Zeitfenster 81c eine bitweise Arbitrierung gemäß den Protokollen des CAN durchgeführt. Die bitweise Arbitrierung beruht darauf, dass für den Fall, dass mehrere Teilnehmerstationen 13 gleichzeitig auf den ersten Kanal 15 zugreifen und Bits mit verschiedenen Werten senden, von allen Stationen stets ein Bit mit einem bestimmten Wert empfangen wird. Der Wert dieses Bits wird als "dominantes Bit" bezeichnet und entspricht im gezeigten Beispiel dem Wert 0. Ferner ist die erste Signalleitung 51 so aufgebaut, dass jede Teilnehmerstation 13 über ihren CAN-Transceiver 31 während sie auf den ersten Kanal 15 zugreift empfangen kann. Somit kann jede Teilnehmerstation 13 während sie zum Senden eines Bits auf den ersten Kanal 15 zugreift, den momentanen Zustand des ersten Kanals 15 lesen, um festzustellen, ob dieser Zustand dem gesendeten Bit entspricht.

Figur 5 zeigt einen Ausschnitt eines zeitlichen Verlaufs des logischen Zustands (Wert 0 oder 1) des ersten Kanals 15 innerhalb des Zeitfensters 81c. Nach einer Leerlaufzeit 82, in welcher der erste Kanal 15 von keiner Teilnehmerstation 13 belegt war, beginnt eine betrachtete Teilnehmerstation 13 ein Startbit 83 eines Rahmens 85 zu senden. Nach Übertragung des Startbits 83 sendet die Teilnehmerstation 13 ein Arbitrierungsfeld 87, das insbesondere die Kennung der Nachricht, die den Typ der Nachricht anzeigt, enthält. Während der Übertragung des Arbitrierungsfelds 87 vergleicht die Teilnehmerstation 13 den logischen Zustand des ersten Kanals 15 mit dem jeweils gesendeten Bit des Arbitrierungsfelds 87. Stellt die Teilnehmerstation 13 während der Übertragung des Arbitrierungsfelds 87 fest, dass der erfasste Zustand des ersten Kanals nicht dem gesendeten Bit entspricht, dann bricht die Teilnehmerstation 13 die Übertragung des Rahmens 85 ab. Somit ist sichergestellt, dass nach der Übertragung des Arbitrierungsfelds 87 zu einem Zeitpunkt tₐ₅ eine Teilnehmerstation 13 exklusiven Zugriff auf den ersten Kanal 15 hat. Alle anderen Stationen, die gleichzeitig auf den ersten Kanal 15 zugegriffen haben, um einen Rahmen 85 zu übertragen, haben zum Zeitpunkt tₐ₅ ihre Übertragung und somit ihren Zugriff auf den ersten Kanal 15 abgebrochen. Somit entspricht der Zeitpunkt tₐ₅ dem Beginn eines weiteren Freigabeintervalls ΔT₅. Nach dem Senden des Arbitrierungsfelds 87 sendet die Teilnehmerstation 13 ein Steuerfeld 89 des Rahmens 85, ein Datenfeld 91 des Rahmens 85 sowie ein Prüffeld 93 (sog. CRC-Feld).

In einem auf das Prüffeld 93 folgenden Quittierungsfeld 95 können andere Teilnehmerstationen 13 ein Quittierungsbit über den ersten Kanal 15 übertragen, das heißt auf den ersten Kanal 15 zugreifen. Somit endet das Freigabeintervall ΔT₅, innerhalb dessen die betrachtete Teilnehmerstation 13 exklusiven Zugriff auf den ersten Kanal 15 hat, zum Ende der Übertragung des Prüffelds 93, das heißt zu einem Zeitpunkt tₑ₅. Auf das Quittierungsfeld 95 folgt ein Feld mit Stoppbits 97. Abweichend von der gezeigten Ausführungsform, kann das Freigabeintervall auch kürzer gewählt werden; es muss jedoch innerhalb des Intervalls ΔT₅ liegen, in welchem die Teilnehmerstation 13 den exklusiven Zugriff auf den ersten Kanal 15 hat.

Während den Zeitfenstern 81 c sorgt der CAN-Controller 23 dafür, dass das Zugriffssteuersignal a nur während des Freigabeintervalls ΔT₅ aktiv ist, so dass der Kommunikationscontroller 27 innerhalb der Zeitfenster 81 c nur während des Freigabeintervalls ΔT₅ auf den zweiten Kanal 19 zugreift.

Abweichend von der gezeigten Ausführungsform kann auch vorgesehen werden, dass der CAN-Controller 23 das Freigabesignal a zum Freigeben des Zugriffs auf den zweiten Kanal 19 nur innerhalb solcher Zeitfenster 81, die zum Übertragen von Nachrichten eines bestimmten Typs vorgesehen sind, ausgibt, das heißt beispielsweise innerhalb der Zeitfenster 81b. In denjenigen Zeitfenstern (z. B. den Zeitfenstern 81c), die zum Übertragen von Nachrichten unterschiedlichen Typs verwendet werden, das heißt innerhalb derer die bitweise Arbitrierung stattfindet, wird bei dieser Ausführungsform der zweite Kanal 19 nicht genutzt.

Es sind des weiteren innerhalb eines Gesamtzyklus 77 auch freie Zeitfenster möglich, innerhalb derer keine Nachrichten über den ersten Kanal 15 übertragen werden, beispielsweise das Zeitfenster 81 d in Figur 4. In einer nicht weiter ausgeführten Ausführungsform kann auch vorgesehen werden, dass der CAN-Controller 23 das Freigabesignal a zum Freigeben des Zugriffs auf den zweiten Kanal 19 nur innerhalb solcher leeren Zeitfenster wie beispielsweise Zeitfenster 81d freigibt. Dann ist durch diese Abhängigkeit des Signales auf dem zweiten Kanal 19 vom Signal auf dem ersten Kanals 15 eine Wechselwirkung zwischen den Signalen ausgeschlossen.

Es ist auch denkbar, dass ein Zugriff auf den zweiten Kanal während des Intervalls ΔT₅ nur dann freigegeben wird, wenn TTCAN beispielsweise wegen eines Fehlers in der CAN-Domäne 17 nicht verfügbar ist. Hierdurch wird ein Notlauf des Bussystems 11, insbesondere des zweiten Kanals 19 bei nicht verfügbarem TTCAN, das heißt bei fehlender Zeitfensterstruktur 77 ermöglicht.

Weiter kann vorgesehen werden, dass die Erfindung auf eine CAN-Domäne 17 angewendet wird, die die Erweiterung TTCAN nicht unterstützt. Bei einer solchen CAN-Domäne 17 fehlt die Zeitfensterstruktur 77. Somit findet dort stets eine bitweise Arbitrierung statt. Bei einer solchen CAN-Domäne 17 wird der Zugriff auf den zweiten Kanal 19 während des in Figur 5 eingezeichneten Freigabeintervalls ΔT₅ freigegeben.

Insgesamt stellt die vorliegende Erfindung ein Verfahren und eine Teilnehmerstation 13 bereit, die es ermöglicht, die Nutzbitrate eines Bussystems mittels eines zusätzlichen, zweiten Kanals 19 erheblich zu erhöhen, so dass größere Datenmengen über das Bussystem schnell übertragen werden können. Hierbei werden die Eigenschaften der Datenübertragung auf dem zweiten Kanal 19 in Abhängigkeit von den auf dem ersten Kanal 15 übertragenen Daten dergestalt angepasst, dass Störungen der beiden Übertragungskanäle untereinander und elektromagnetische Abstrahlungen des Bussystems gegenüber dem Stand der Technik verbessert werden.

## Patentansprüche

1. Verfahren zum Übertragen von ersten Daten (b₁) und zweiten Daten (b₂) zwischen Teilnehmerstationen (13) eines Bussystems (11) über einen von mehreren Teilnehmerstationen (13) gemeinsam genutzten ersten Kanal (15) und einen zusätzlich zu dem ersten Kanal (15) von mehreren Teilnehmerstationen (13) genutzten zweiten Kanal (19) des Bussystems (11), wobei der erste Kanal (15) das Zugriffsverfahren und Übertragungsprotokoll der CAN-Spezifikation oder deren Erweiterung, der TTCAN-Spezifikation, gemäß ISO 11898 verwendet,
wobei der Zugriff auf den zweiten Kanal (19) nach einem beliebigen Zugriffsverfahren gesteuert wird,
**dadurch gekennzeichnet, dass** über den ersten Kanal (15) zu übertragende erste Daten (b₁) und über den zweiten Kanal (19) zu übertragende zweite Daten (b₂) über eine gemeinsame Signalleitung (55) übertragen werden, wobei in Abhängigkeit von den ersten Daten (b₁) ein Datensignal (d) und in Abhängigkeit von den ersten Daten (b₁) und den zweiten Daten (b₂) ein Modulationssignal (m) gebildet wird und das Datensignal (d) mit dem Modulationssignal (m) überlagert wird,
wobei Parameter und / oder charakteristische Kenngrößen des verwendeten Modulationsverfahrens abhängig von den ersten Daten (b₁) oder dem daraus gebildeten Datensignal (d) angepasst werden.

2. Verfahren nach Anspruch 1, **dadurch gekennzeichnet, dass** das Modulationssignal (m) in Abhängigkeit von den ersten Daten (b₁) und den zweiten Daten (b₂) derart gebildet wird, dass es in Zeitabschnitten, die nahe bei den Flankenwechseln des Datensignals (d) liegen, Bereiche mit relativ niedriger Amplitude aufweist.

3. Verfahren nach Anspruch 1 oder 2, **dadurch gekennzeichnet, dass** das Modulationssignal (m) in Abhängigkeit von den ersten Daten (b₁) und den zweiten Daten (b₂) derart gebildet wird, dass es in Zeitabschnitten, die nahe bei den Flankenwechseln des Datensignals (d) liegen, unterbrochen wird.

4. Verfahren nach Anspruch 1 bis 3, **dadurch gekennzeichnet, dass** die Amplitude des Modulationssignals (m) so gewählt wird, dass sie über dem Rausch-Niveau der Signalleitung (55) liegt, aber klein genug ist, so dass das Signal sich ausreichend von Wechseln zwischen den möglichen Buspegeln gemäß der Spezifikation des Datensignals (d) unterscheidet.

5. Verfahren nach Anspruch 1, **dadurch gekennzeichnet, dass** bei der Bildung des Modulationssignales (m) die abhängig vom aktuell vorliegenden Wert der ersten Daten (b₁) oder des daraus gebildeten Datensignals (d) unterschiedliche Impedanz des Bussystems (11) berücksichtigt wird.

6. Verfahren nach einem der Ansprüche 1 bis 5, **dadurch gekennzeichnet, dass** der Zugriff auf den zweiten Kanal (19) derart gesteuert wird, dass der zweite Kanal (19) nur innerhalb mindestens eines Freigabeintervalls (ΔT₁, ΔT₂, ΔT₃, ΔT₄, ΔT₅) freigegeben wird, in welchem der Zugriff auf den Bus zur Nutzung des ersten Kanals (15) exklusiv an eine Teilnehmerstation (13) vergeben ist.

7. Verfahren nach Anspruch 6, **dadurch gekennzeichnet, dass** als das mindestens eine Freigabeintervall (ΔT₁, ΔT₂, ΔT₃, ΔT₄, ΔT₅) wenigstens ein exklusiv vergebenes Zeitfenster (81b) oder ein Teil davon innerhalb der sich regelmäßig wiederholenden TTCAN-Zeitfensterstruktur (77) vorgegeben wird.

8. Verfahren nach Anspruch 6, **dadurch gekennzeichnet, dass** als das mindestens eine Freigabeintervall (ΔT₁, ΔT₂, ΔT₃, ΔT₄, ΔT₅) wenigstens ein freies Zeitfenster (81d) oder ein Teil davon innerhalb der sich regelmäßig wiederholenden TTCAN-Zeitfensterstruktur (77) vorgegeben wird.

9. Verfahren nach Anspruch 6, **dadurch gekennzeichnet, dass** der Beginn des mindestens einen Freigabeintervalls (ΔT₁, ΔT₂, ΔT₃, ΔT₄, ΔT₅) von der Teilnehmerstation (13) mittels bitweiser Arbitrierung des ersten Kanals (15) ermittelt wird und das Ende (tₑ₁, tₑ₂, tₑ₃, tₑ₄, tₑ₅) desselben Freigabeintervalls durch den Zeitpunkt gegeben ist, an welchem die Teilnehmerstation (13) nach erfolgreicher Arbitrierung des ersten Kanals (15) diesen wieder freigibt.

10. Teilnehmerstation (13) eines Bussystems (11), mit einem ersten Steuerelement (23) zum Steuern eines Zugriffs der Teilnehmerstation (13) auf einen von mehreren Teilnehmerstationen (13) gemeinsam genutzten ersten Kanal (15) des Bussystems (11), wobei der erste Kanal (15) das Zugriffsverfahren und Übertragungsprotokoll der CAN-Spezifikation oder deren Erweiterung, der TTCAN-Spezifikation, gemäß ISO 11898 verwendet, und einem zweiten Steuerelement (27) zum Steuern eines Zugriffs der Teilnehmerstation (13) auf einen von mehreren Teilnehmerstationen (13) genutzten zweiten Kanal (19) des Bussystems (11) nach einem beliebigen Zugriffsverfahren, wobei die beiden Steuerelemente (23, 27) über Medienanschlusseinheiten (31, 37) mit einer gemeinsamen Signalleitung (55) derart verbunden sind, dass über den ersten Kanal (15) zu übertragende erste Daten (b₁) und über den zweiten Kanal (19) zu übertragende zweite Daten (b₂) über die gemeinsame Signalleitung (55) zwischen verschiedenen Teilnehmerstationen (13) übertragbar sind, **dadurch gekennzeichnet, dass**
in Abhängigkeit von den ersten Daten (b₁) ein Datensignal (d) und in Abhängigkeit von den ersten Daten (b₁) und den zweiten Daten (b₂) ein Modulationssignal (m) gebildet wird und das Datensignal (d) mit dem Modulationssignal (m) überlagert wird,
wobei Parameter und / oder charakteristische Kenngrößen des verwendeten Modulationsverfahrens abhängig von den ersten Daten (b₁) oder dem daraus gebildeten Datensignal (d) angepasst werden.

11. Teilnehmerstation (13) nach Anspruch 10, **dadurch gekennzeichnet, dass** die zweite Medienanschlusseinheit (37) ein Koppelelement (61) umfasst oder mit einem Koppelelement verbunden ist, durch welches das Datensignal (d) und das Modulationssignal (m) überlagert und auf der gemeinsamen Signalleitung (55) übertragen werden.

12. Teilnehmerstation (13) nach Anspruch 10 oder 11, **dadurch gekennzeichnet, dass** das Koppelelement (61) mit einer Gleichtaktdrossel (59) derart kombiniert ist, dass ein die Überlagerung von Datensignal (d) und Modulationssignal (m) umfassendes Hochfrequenzsignal induktiv ein- bzw. auskoppelbar ist.

13. Teilnehmerstation (13) nach einem der Ansprüche 10 bis 12, **dadurch gekennzeichnet, dass** die zweite Medienanschlusseinheit (37) oder das davon umfasste oder damit verbundene Koppelelement (61) mit dem ersten Steuerelement (23) durch eine Steuerleitung (101) verbunden ist, so dass ein Eigenschaftssteuersignal (e) zur Beeinflussung des Modulationssignals (m) herangezogen werden kann.

14. Teilnehmerstation (13) nach einem der Ansprüche 10 bis 12, **dadurch gekennzeichnet, dass** die zweite Medienanschlusseinheit (37) oder das davon umfasste oder damit verbundene Koppelelement (61) mit der ersten Medienanschlusseinheit (31) durch eine Signalverbindung (103) verbunden ist, so dass die ersten Daten (b₁) und/oder das Datensignal (d) erfasst und zusammen mit den zweiten Daten (b₂) zur Erstellung des Modulationssignals (m) herangezogen werden kann.

15. Teilnehmerstation (13) nach Anspruch 14, **dadurch gekennzeichnet, dass** durch geeignete Wahl der zwischen Medienanschlusseinheit (31) und Koppelelement (61) zwischengeschalteten Gleichtaktdrossel (59) eine Rückkopplung des eingekoppelten Modulationssignals (m) auf die über die Signalverbindung (103) erfassten ersten Daten (b₁) und/oder das Datensignal (d) verhindert wird.

16. Teilnehmerstation (13) nach einem der Ansprüche 10 bis 15, **dadurch gekennzeichnet, dass** die Aufgaben des ersten Steuerelements (23) und des zweiten Steuerelements (27) in einem erweiterten Steuerelement (111) zusammengeführt werden, wobei das erweiterte Steuerelement (111) das Eigenschaftssteuersignal (e) zur Beeinflussung des Modulationssignals (m) an die zweite Medienanschlusseinheit (37) oder das davon umfasste oder damit verbundene Koppelelement (61) über eine der vorgesehenen Verbindungen (39, 41) überträgt, so dass das Eigenschaftssteuersignal (e) zur Beeinflussung des Modulationssignals (m) herangezogen werden kann.

17. Teilnehmerstation (13) nach einem der Ansprüche 10 bis 15, **dadurch gekennzeichnet, dass** das zweite Steuerelement (27) mit dem ersten Steuerelement (23) derart gekoppelt ist, dass das zweite Steuerelement (27), vorzugsweise mittels eines von dem ersten Steuerelement (23) erzeugten Zugriffssteuersignals (a), zum Freigeben des Zugriffs auf den zweiten Kanal (19) steuerbar ist.

18. Teilnehmerstation (13) nach einem der Ansprüche 10 bis 17, **dadurch gekennzeichnet, dass** das erste Steuerelement (23) zum Steuern eines Zugriffs der Teilnehmerstation (13) auf den zweiten Kanal (19) derart eingerichtet ist, dass der zweite Kanal (19) nur innerhalb des Freigabeintervalls (ΔT₁, ΔT₂, ΔT₃, ΔT₄, ΔT₅) für den Zugriff durch die Teilnehmerstation (13) freigegeben ist.

19. Teilnehmerstation (13) nach einem der Ansprüche 10 bis 18, **dadurch gekennzeichnet, dass** die Teilnehmerstation (13) zum Ausführen des Verfahrens nach einem der Ansprüche 1 bis 11 eingerichtet ist.

## Claims

1. Method for transmitting first data (b₁) and second data (b₂) between subscriber stations (13) in a bus system (11) via a first channel (15), which is used jointly by a plurality of subscriber stations (13), and
a second channel (19), which is used in addition to the first channel (15) by a plurality of subscriber stations (13), in the bus system (11), wherein the first channel (15) uses the access method and transmission protocol of the CAN specification or the extension thereof, the TTCAN specification, based on ISO 11898,
wherein access to the second channel (19) is controlled according to any access method,
**characterized in that** first data (b₁) to be transmitted via the first channel (15) and second data (b₂) to be transmitted via the second channel (19) are transmitted via a shared signal line (55), wherein a data signal (d) is formed on the basis of the first data (b₁) and a modulation signal (m) is formed on the basis of the first data (b₁) and the second data (b₂) and the data signal (d) is overlaid with the modulation signal (m), wherein parameters and/or characteristic variables of the modulation method used are customized on the basis of the first data (b₁) or the data signal (d) formed therefrom.

2. Method according to Claim 1, **characterized in that** the modulation signal (m) is formed on the basis of the first data (b₁) and the second data (b₂) such that it has ranges of relatively low amplitude in periods of time that are close to the edge changes of the data signal (d).

3. Method according to Claim 1 or 2, **characterized in that** the modulation signal (m) is formed on the basis of the first data (b₁) and the second data (b₂) such that it is interrupted in periods of time that are close to the edge changes of the data signal (d).

4. Method according to Claims 1 to 3, **characterized in that** the amplitude of the modulation signal (m) is chosen such that it is above the noise level of the signal line (55) but is small enough, as a result of which the signal differs adequately from changes between the possible bus levels based on the specification of the data signal (d).

5. Method according to Claim 1, **characterized in that** the formation of the modulation signal (m) takes account of the impedance of the bus system (11), which impedance is different on the basis of the currently available value of the first data (b₁) or of the data signal (d) formed therefrom.

6. Method according to one of Claims 1 to 5, **characterized in that** access to the second channel (19) is controlled such that the second channel (19) is enabled only within at least one enable interval (ΔT₁, ΔT₂, ΔT₃, ΔT₄, ΔT₅), in which access to the bus for the purpose of using the first channel (15) is allocated exclusively to one subscriber station (13).

7. Method according to Claim 6, **characterized in that** at least one exclusively allocated time window (81d) or a portion thereof within the regularly repeating TTCAN time window structure (77) is prescribed as the at least one enable interval (ΔT₁, ΔT₂, ΔT₃, ΔT₄, ΔT₅).

8. Method according to Claim 6, **characterized in that** at least one free time window (81d) or a portion thereof within the regularly repeating TTCAN time window structure (77) is prescribed as the at least one enable interval (ΔT₁, ΔT₂, ΔT₃, ΔT₄, ΔT₅) .

9. Method according to Claim 6, **characterized in that** the start of the at least one enable interval (ΔT₁, ΔT₂, ΔT₃, ΔT₄, ΔT₅) is ascertained by the subscriber station (13) by means of bit-by-bit arbitration of the first channel (15), and the end (tₑ₁, tₑ₂, tₑ₃, tₑ₄, tₑ₅) of the same enable interval is provided by the instant at which the subscriber station (13) enables the first channel (15) again following successful arbitration thereof.

10. Subscriber station (13) in a bus system (11), having a first control element (23) for controlling access by the subscriber station (13) to a first channel (15) in the bus system (11), which first channel is used jointly by a plurality of subscriber stations (13), wherein the first channel (15) uses the access method and transmission protocol of the CAN specification or the extension thereof, the TTCAN specification, based on ISO 11898, and a second control element (27) for controlling access by the subscriber station (13) to a second channel (19) in the bus system (11), which second channel is used by a plurality of subscriber stations (13), according to any access method, wherein the two control elements (23, 27) are connected to a shared signal line (55) via media access units (31, 37) such that first data (b₁) to be transmitted via the first channel (15) and second data (b₂) to be transmitted via the second channel (19) can be transmitted between various subscriber stations (13) via the shared signal line (55), **characterized in that** a data signal (d) is formed on the basis of the first data (b₁) and a modulation signal (m) is formed on the basis of the first data (b₁) and the second data (b₂) and the data signal (d) is overlaid with the modulation signal (m),
wherein parameters and/or characteristic variables of the modulation method used are customized on the basis of the first data (b₁) or the data signal (d) formed therefrom.

11. Subscriber station (13) according to Claim 10, **characterized in that** the second media access unit (37) comprises a coupling element (61) or is connected to a coupling element that overlays the data signal (d) and the modulation signal (m) and transmits them on the shared signal line (55).

12. Subscriber station (13) according to Claim 10 or 11, **characterized in that** the coupling element (61) is combined with a common-mode inductor (59) such that a radio-frequency signal comprising the overlay of data signal (d) and modulation signal (m) can be inductively coupled in or out.

13. Subscriber station (13) according to one of Claims 10 to 12, **characterized in that** the second media access unit (37) or the coupling element (61) comprised thereby or connected thereto is connected to the first control element (23) via a control line (101), as a result of which a property control signal (e) can be used for influencing the modulation signal (m).

14. Subscriber station (13) according to one of Claims 10 to 12, **characterized in that** the second media access unit (37) or the coupling element (61) comprised thereby or connected thereto is connected to the first media access unit (31) via a signal connection (103), as a result of which the first data (b₁) and/or the data signal (d) can be captured and can be used together with the second data (b₂) for compiling the modulation signal (m).

15. Subscriber station (13) according to Claim 14, **characterized in that** suitable choice of the common-mode inductor (59) interposed between media access unit (31) and coupling element (61) prevents the coupled-in modulation signal (m) from being fed back to the first data (b₁), captured via the signal connection (103), and/or the data signal (d).

16. Subscriber station (13) according to one of Claims 10 to 15, **characterized in that** the tasks of the first control element (23) and the second control element (27) are combined in an extended control element (111), wherein the extended control element (111) transmits the property control signal (e) for influencing the modulation signal (m) of the second media access unit (37) or the coupling element (61) comprised thereby or connected thereto via one of the provided connections (39, 41), as a result of which the property control signal (e) can be used for influencing the modulation signal (m).

17. Subscriber station (13) according to one of Claims 10 to 15, **characterized in that** the second control element (27) is coupled to the first control element (23) such that the second control element (27) can be controlled, preferably by means of an access control signal (a) produced by the first control element (23), in order to enable access to the second channel (19).

18. Subscriber station (13) according to one of Claims 10 to 17, **characterized in that** the first control element (23) for controlling access by the subscriber station (13) to the second channel (19) is set up such that the second channel (19) is enabled for access by the subscriber station (13) only within the enable interval (ΔT₁, ΔT₂, ΔT₃, ΔT₄, ΔT₅).

19. Subscriber station (13) according to one of Claims 10 to 18, **characterized in that** the subscriber station (13) is set up for carrying out the method according to one of Claims 1 to 11.

## Revendications

1. Procédé de transmission de premières données (b₁) et de deuxièmes données (b₂) entre des stations d'abonné (13) d'un système de bus (11) par le biais d'un premier canal (15) utilisé en commun par plusieurs stations d'abonné (13) et d'un deuxième canal (19) du système de bus (11) utilisé en plus du premier canal (15) par plusieurs stations d'abonné (13), le premier canal (15) utilisant le procédé d'accès et le protocole de transmission de la spécification CAN ou de son extension, la spécification TTCAN, selon l'ISO 11898, l'accès au deuxième canal (19) étant commandé selon un procédé d'accès quelconque,
**caractérisé en ce que** des premières données (b₁) à transmettre par le biais du premier canal (15) et des deuxièmes données (b₂) à transmettre par le biais du deuxième canal (19) sont transmises par le biais d'une ligne de signal commune (55), un signal de données (d) étant formé en fonction des premières données (b₁) et un signal de modulation (m) en fonction des premières données (b₁) et des deuxièmes données (b₂) et le signal de données (d) étant superposé avec le signal de modulation (m),
des paramètres et/ou des grandeurs caractéristiques du procédé de modulation utilisé étant adaptés en fonction des premières données (b₁) ou du signal de données (d) formé à partir de celles-ci.

2. Procédé selon la revendication 1, **caractérisé en ce que** le signal de modulation (m) est formé en fonction des premières données (b₁) et des deuxièmes données (b₂) de telle sorte qu'il présente des zones ayant une amplitude relativement faible dans les portions de temps qui se trouvent à proximité du changement de front du signal de données (d).

3. Procédé selon la revendication 1 ou 2, **caractérisé en ce que** le signal de modulation (m) est formé en fonction des premières données (b₁) et des deuxièmes données (b₂) de telle sorte qu'il est interrompu dans les portions de temps qui se trouvent à proximité du changement de front du signal de données (d) .

4. Procédé selon les revendications 1 à 3, **caractérisé en ce que** l'amplitude du signal de modulation (m) est choisie de telle sorte qu'elle est supérieure au niveau de bruit de la ligne de signal (55), mais suffisamment faible pour que le signal se distingue suffisamment des changements entre les états possibles du bus conformément à la spécification du signal de données (d).

5. Procédé selon la revendication 1, **caractérisé en ce que** lors de la formation du signal de modulation (m), il est tenu compte de l'impédance du système de bus (11), laquelle est différente en fonction de la valeur actuellement présente des premières données (b₁) ou du signal de données (d) formé à partir de celles-ci.

6. Procédé selon l'une des revendications 1 à 5, **caractérisé en ce que** l'accès au deuxième canal (19) est commandé de telle sorte que le deuxième canal (19) n'est libéré qu'au sein d'au moins un intervalle de libération (ΔT₁, ΔT₂, ΔT₃, ΔT₄, ΔT₅) pendant lequel l'accès au bus en vue d'utiliser le premier canal (15) est attribué exclusivement à une station d'abonné (13)

7. Procédé selon la revendication 6, **caractérisé en ce que** l'au moins un intervalle de libération (ΔT₁, ΔT₂, ΔT₃, ΔT₄, ΔT₅) prédéfini est au moins un créneau temporel (81b) attribué en exclusivité ou une partie de celui-ci à l'intérieur de la structure de créneaux temporels TTCAN (77) qui se répète régulièrement.

8. Procédé selon la revendication 6, **caractérisé en ce que** l'au moins un intervalle de libération (ΔT₁, ΔT₂, ΔT₃, ΔT₄, ΔT₅) prédéfini est au moins un créneau temporel (81d) libre ou une partie de celui-ci à l'intérieur de la structure de créneaux temporels TTCAN (77) qui se répète régulièrement.

9. Procédé selon la revendication 6, **caractérisé en ce que** le début de l'au moins un intervalle de libération (ΔT₁, ΔT₂, ΔT₃, ΔT₄, ΔT₅) est déterminé par la station d'abonné (13) à l'aide d'un arbitrage bit par bit du premier canal (15) et la fin (tₑ₁, tₑ₂, tₑ₃, tₑ₄, tₑ₅) du même intervalle de libération est fixée par l'instant auquel la station d'abonné (13) libère de nouveau le premier canal (15) après un arbitrage réussi de celui-ci.

10. Station d'abonné (13) d'un système de bus (11), comprenant un premier élément de commande (23) pour commander un accès de la station d'abonné (13) à un premier canal (15) du système de bus (11) utilisé en commun par plusieurs stations d'abonné (13), le premier canal (15) utilisant le procédé d'accès et le protocole de transmission de la spécification CAN ou de son extension, la spécification TTCAN, selon l'ISO 11898, et un deuxième élément de commande (27) pour commander un accès de la station d'abonné (13) à un deuxième canal (19) du système de bus (11) utilisé par plusieurs stations d'abonné (13) selon un procédé d'accès quelconque, les deux éléments de commande (23, 27) étant reliés par le biais unités de raccordement au support (31, 37) avec une ligne de signal commune (55) de telle sorte que des premières données (b₁) à transmettre par le biais du premier canal (15) et des deuxièmes données (b₂) à transmettre par le biais du deuxième canal (19) peuvent être transmises par le biais de la ligne de signal commune (55) entre les différentes stations d'abonné (13), **caractérisée en ce qu'**un signal de données (d) est formé en fonction des premières données (b₁) et un signal de modulation (m) en fonction des premières données (b₁) et des deuxièmes données (b₂) et le signal de données (d) est superposé avec le signal de modulation (m), des paramètres et/ou des grandeurs caractéristiques du procédé de modulation utilisé étant adaptés en fonction des premières données (b₁) ou du signal de données (d) formé à partir de celles-ci.

11. Station d'abonné (13) selon la revendication 10, **caractérisée en ce que** la deuxième unité de raccordement au support (37) entoure un élément de couplage (61) ou est reliée avec un élément de couplage à travers lequel le signal de données (d) et le signal de modulation (m) sont superposés et transmis sur la ligne de signal commune (55).

12. Station d'abonné (13) selon la revendication 10 ou 11, **caractérisée en ce que** l'élément de couplage (61) est combiné avec une bobine de choc en mode commun (59) de telle sorte qu'il est possible d'injecter ou d'extraire de manière inductive un signal à haute fréquence incluant la superposition du signal de données (d) et du signal de modulation (m).

13. Station d'abonné (13) selon l'une des revendications 10 à 12, **caractérisée en ce que** la deuxième unité de raccordement au support (37) ou encore l'élément de couplage (61) entouré par celle-ci ou relié avec celle-ci est relié avec le premier élément de commande (23) par une ligne de commande (101) de sorte qu'il est possible d'utiliser un signal de commande de propriété (e) pour influencer le signal de modulation (m).

14. Station d'abonné (13) selon l'une des revendications 10 à 12, **caractérisée en ce que** la deuxième unité de raccordement au support (37) ou encore l'élément de couplage (61) entouré par celle-ci ou relié avec celle-ci est relié avec la première unité de raccordement au support (31) par une liaison de signal (103) de telle sorte que les premières données (b₁) et/ou le signal de données (d) puissent être captés et utilisés conjointement avec les deuxièmes données (b₂) pour la création du signal de modulation (m).

15. Station d'abonné (13) selon la revendication 14, **caractérisée en ce qu'**une sélection appropriée de la bobine de choc en mode commun (59) interconnectée entre l'unité de raccordement au support (31) et l'élément de couplage (61) permet d'empêcher une rétroaction du signal de modulation (m) injecté sur les premières données (b₁) et/ou le signal de données (d) captés par le biais de la liaison de signal (103).

16. Station d'abonné (13) selon l'une des revendications 10 à 15, **caractérisée en ce que** les tâches du premier élément de commande (23) et du deuxième élément de commande (27) sont regroupées en un élément de commande étendu (111), l'élément de commande étendu (111) transmettant le signal de commande de propriété (e) pour influencer le signal de modulation (m) à la deuxième unité de raccordement au support (37) ou encore à l'élément de couplage (61) entouré par celle-ci ou relié avec celle-ci par le biais de l'une des liaisons (39, 41) prévues, de sorte que le signal de commande de propriété (e) peut être utilisé pour influencer le signal de modulation (m).

17. Station d'abonné (13) selon l'une des revendications 10 à 15, **caractérisée en ce que** le deuxième élément de commande (27) est couplé avec le premier élément de commande (23) de telle sorte que le deuxième élément de commande (27) peut être commandé pour libérer l'accès au deuxième canal (19), de préférence au moyen d'un signal de commande d'accès (a) généré par le premier élément de commande (23).

18. Station d'abonné (13) selon l'une des revendications 10 à 17, **caractérisée en ce que** le premier élément de commande (23) est configuré pour commander un accès de la station d'abonné (13) au deuxième canal (19) de telle sorte que le deuxième canal (19) n'est libéré pour l'accès par la station d'abonné (13) qu'au sein de l'intervalle de libération (ΔT₁, ΔT₂, ΔT₃, ΔT₄, ΔT₅).

19. Station d'abonné (13) selon l'une des revendications 10 à 18, **caractérisée en ce que** la station d'abonné (13) est configurée pour mettre en oeuvre le procédé selon l'une des revendications 1 à 11.
